# EUROPEAN PATENT APPLICATION

(11) **EP 0 903 195 A1**
(43) Date of publication of application: **24.03.1999**
(21) Application number: 98115560.9
(22) Date of filing: 19.08.1998
(51) Int. Cl.: B23K 9/10, B23K 37/00

(54) **System for the remote setting, regulation and control of the functions of welding machines**

(30) Priority: 04.09.1997 IT VI970147
(71) Applicant: Esseti S.r.l., 36030 Costabissara VI (IT)
(72) Inventor: TERZO, Maurizio, 36100 Vicenca VI (IT)
(74) Representative: La Ciura, Salvatore

(57) **Abstract**

The invention relates to a system for remote control of the setting parameters of welding machines and the like, comprising systems in a welding machine designed to store a set of combinations of parameters, each of which corresponding to a welding situation, and systems designed to retrieve each of the said combinations automatically at a distance, at the operator's discretion.

Said systems designed to store a set of parameters are incorporated in the basic generator (1), and consist of electronic devices (3) which regulate the power and other parameters of the machine and are connected in turn to a microprocessor (4) that contains a memory (5) in which welding parameters or combinations thereof are stored, devices for remote retrieval of the said parameters or combinations thereof being included in the system.

## Description

This invention relates to a new system designed to allow storage and remote retrieval of the setting parameters of semi-automatic welding machines and other similar machines.

In particular, using the system in accordance with the invention, it is possible to employ a remote control or other similar device operating with radio signals or waves of various kinds to retrieve a set of stored functions for which a welding machine has been set up, thus allowing the operator to control the machine functions without moving from the place of operation.

Welding machines consist of a generator designed to supply a controlled amount of electrical current and a welding tool electrically connected to the basic unit, so that welding can be performed at a distance from the said unit if required.

Various parameters such as the welding wire feed rate, the intensity of the current supplied, etc., can be set in welding machines; these settings vary according to use, thus allowing the operator to weld components or parts with different characteristics, and to perform the job in the most appropriate way.

For this purpose, welding machines are usually fitted with regulating devices which can be set from time to time from a control panel fitted to the machine or, in the case of the latest models of welding machine, from a remote panel connected by cables to the basic unit.

These two systems present difficulties for the operator, due in both cases to the fact that the place of operation is often located at a distance from the basic unit and sometimes even at a different level, as in the case of surfaces situated at different heights.

The operator is therefore often obliged to work at a distance from the basic unit, which involves considerable inconvenience as regards the machine settings.

When the setting parameters have to be input directly from the generator panel the operator's difficulties increase, as he has to stop welding to access the panel, leaving the place of operation and then returning to it after inputting the settings required for a given task.

If the parameters can be input from a control panel connected by cables to the basic unit, fewer difficulties arise, but there are still some restrictions and inconvenience for the operator, who has to stop welding and input the various parameters, such as feed rate and power and other parameters, from the wired remote control on each occasion; this involves machine stoppages that may be lengthy.

The purpose of this invention is to offer a new control system for welding machines and the like which enables the functions required for the various welding stages to be preset on the machine and then selected using a radio-operated remote control rather than a wired control device. This makes the operator's task much more convenient by simplifying the setting operations, which are limited to retrieving one of various combinations of stored parameters, even at a distance from the machine or out of sight of it.

The system forming the subject of the invention requires the machine to be prepared by inputting and storing a set of combinations of setting parameters, each of which corresponds to an operating situation, and retrieving the preset sample values at a distance from the machine with a remote control.

The immediate advantage offered by the invention is that the setting operations performed by the operator are limited and facilitated, so that detailed knowledge of the welding machine is no longer necessary; it is sufficient for the operator to select the required function from among the preset functions, to the advantage of the operational welding stages.

In particular, a table with several sets of parameters which correspond to different welding situations (e.g. on the basis of different metal thicknesses and in general on the basis of the different electrical power levels used) is stored in the welding machine, and remote control devices enable the operator to input the machine settings by means of remote retrieval of the parameters stored in the machine.

Further characteristics and details of this invention will clearly appear from the following description of a preferred form of manufacture which is illustrated, by way of example but not of limitation, in the single annexed figure which contains the block diagram of a possible example of components used to select the functions of a welding machine comprising the control system in accordance with the invention.

With reference to the annexed figure, no. 1 schematically indicates the basic generator of a welding machine, which might be the type comprising machine cycle control hardware that controls the various operating parameters via a microprocessor.

Generator 1 is fitted with a converter 2 and a user interface which allows the welder to input the various machine settings.

This user interface is based on a system that allows the operator to choose one of a number of options and retrieve it merely by typing on a simplified remote control.

Converter 2 is connected to electronic devices 3 (control unit), which regulate the machine power and other parameters and are connected in turn to a microprocessor 4 that comprises a memory 5 in which the parameters to be retrieved later are stored.

The whole assembly is connected to a user interface 6 which may comprise a display or the like, and to a receiving device 7 which decodes the signals received from a radio control 8 that enables the various settings to be input from a distance.

Control unit 3 therefore comprises a sector used to set the power and the basic functions of the machine, and devices for storing combinations of parameters, together with an interface that allows the operator to preset a number of welding parameters on a remote control in order to simplify the final use of the machine.

During welding, instead of returning to the machine to retrieve the required parameters, the operator can use radio control 8 which allows him to perform the same operations as he could in front of the machine, with the advantage that each command can retrieve the settings of a number of parameters simultaneously.

For example, in the case of a multiple-impulse welder, settings such as machine power level, wire feed rate, electrical current level and arc length are involved. When the welder has to perform a welding operation to manufacture a complex object, the welding current and arc length usually have to be changed several times, using settings that are repeated throughout the working day.

Once these parameters have been input into the machine, regulation by the operator is very simple, as he merely has to type the required setting on remote control 8.

Each work point therefore presents a number of setting parameters which can be retrieved with the remote control, thus entirely changing the welding result produced by the machine.

Fine-tuning buttons 9 can also be incorporated in the remote control so that the variables of each parameter can be regulated from a distance, starting from the preset values.

There are also more complex cases in which 10 or 12 types of setting are retrieved from the machine with each parameter, merely by pressing the corresponding key on the remote control.

As will be seen, the system described allows the functions required for the various stages of welding to be preset on the machine, and therefore facilitates the input of settings by the operator, who merely uses the radio control to retrieve the sample values corresponding to a given job situation, even at a distance from or out of sight of the machine.

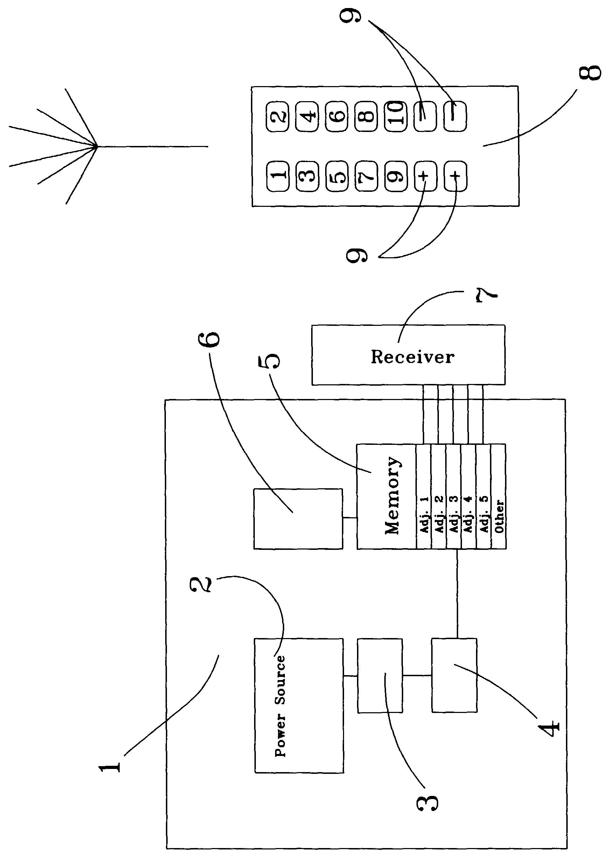

## Claims

1. System for remote control of the setting parameters of welding machines and the like, characterised by the fact that it comprises systems in a welding machine designed to store a set of combinations of parameters, each of which corresponds to a welding situation, and systems designed to retrieve each of the said combinations automatically at a distance, at the operator's discretion.

2. Storage and remote control system in accordance with the preceding claim, characterised by the fact that the said systems designed to store a set of parameters are incorporated in the basic generator (1), and consist of electronic devices (3) which regulate the power and other parameters of the machine and are connected in turn to a microprocessor (4) that contains a memory (5) in which welding parameters or combinations thereof are stored, devices for remote retrieval of the said parameters or combinations thereof being included in the system.

3. Storage and remote control system in accordance with the preceding claims, characterised by the fact that the said systems designed to store the welding parameters are connected to an interface (6) which is connected in turn to a receiving device (7) designed to receive signals generated by a remote control operated by the operator.

4. Storage and remote control system in accordance with the preceding claims, characterised by the fact that the systems designed for automatic remote retrieval of each of the said combinations at the operator's discretion are constituted by a radio control (8) or the like.

5. Welding machine comprising a remote control system in accordance with any of the preceding claims.
